# EUROPEAN PATENT APPLICATION

(11) **EP 2 198 944 A1**
(43) Date of publication of application: **23.06.2010**
(21) Application number: 08739530.7
(22) Date of filing: 31.03.2008
(51) Int. Cl.: B01D 39/16, B01D 46/52

(54) **FILTER MEDIUM FOR AIR FILTER AND AIR FILTER**

(30) Priority: 08.09.2007 JP 2007233467
(71) Applicant: Nippon Muki CO., LTD., 1-1-1 Nihonbashi Chuo-ku Tokyo 103-0027 (JP)
(72) Inventor: BAO, Li, Yuki-shi Ibaraki 307-0046 (JP); KOBAYASHI, Makoto, Yuki-shi Ibaraki 307-0046 (JP); HAYASHI, Shiro, Yuki-shi Ibaraki 307-0046 (JP); KIM, Jincheol, Yuki-shi Ibaraki 307-0046 (JP); NIINUMA, Hitoshi, Yuki-shi Ibaraki 307-0046 (JP)
(74) Representative: Thun, Clemens
(86) International application number: PCT/JP2008/056417
(87) International publication number: WO 2009/031334

(57) **Abstract**

An air filter comprising a filter pack comprising a folded nanofiber filter medium, fitted to a filter frame through a seal material, the nanofiber filter medium being a filter medium for an air filter, comprising a nanofiber filter medium which, when a filter medium face velocity is 5.3 cm/s, has a performance index of collecting target particle diameter of 0.3 µm, 0.040 (1/Pa) or more, performance index of collecting target particle diameter of 0.1 µm, 0.030 (1/Pa) or more, and performance index of collecting target particle diameter of 0.05 µm, 0.050 (1/Pa) or more. By this, a high air volume and low pressure drop type high-performance air filter using a nanofiber filter medium can be provided.

## Description

### Technical Field

The present invention relates to a filter medium for an air filter in which a nanofiber filter medium is used, and a high air volume and low pressure drop type high-performance air filter.

### Background Art

Improving performance of a filter medium for an air filter is to achieve both high efficiency and low pressure drop. Nanofibers are characterized to be constituted of fibers each having a fiber diameter of less than 1 µm (50 to 800 nm), and many of which have fine and uniform diameter. In general, the finer the fiber diameter is, the more effectively the individual fiber acts for collection of particles, and the smaller the resistance it receives become. Namely, pressure drop is decreased with the increase of efficiency. Furthermore, there is also a pressure drop-reducing effect due to a so-called "slip flow" on the surface of an ultrafine fiber. For this reason, it is considered that the nanofiber is promising for high performance of a filter medium.
Furthermore, when a wiring interval of a semiconductor is reduced to nanosize, particles cleaned in semiconductor production factories, semiconductor handling factories and the like also become nanosize, and it is more effective to use a nanofiber in a filter medium in order to collect such nanoparticles with an air filter.
As a process for producing a nanofiber, there is a process called an electospinning method. Specifically, it is known that positive high voltage is applied to a polymer solution, and the polymer solution is sprayed to a target which is negatively charged, thereby forming a nanofiber. A study has been made to prepare a filter medium for a high-performance air filter by utilizing the nanofiber (see Non-Patent Document 1).
However, a filter medium obtained by collecting nanofibers by the electrospinning method has an inner structure that ultrafine fibers densely intertwine each other, thereby increasing a filling rate of fibers, and surface filtration dominantly functions like a filter medium of a membrane filter. As a result, particles can be removed with high efficiency, but pressure drop is increased. For this reason, the filter medium is not yet put into practical use. Furthermore, due to the structure of the filter medium, there exists a blow-by of air current, which makes the fiber filling heterogeneous. Accordingly, the problem is pointed out that fibers, particularly fine fibers, in the inside of the filter medium are not effectively used, and do not effectively act for the collection of particles. Therefore, where the filling rate of fibers is decreased and heterogeneity in fiber filling is improved, the inner structure of the filter medium can be optimized such that depth filtration can dominantly function to achieve higher performance.
On the other hand, as a low pressure drop filter medium that can remove nanoparticles with high efficiency, it has been proposed to prepare a porous compressive layer obtained by mixing a number of nanofibers and a number of skeletal particles in a given ratio (see Patent Document 1).
However, in the case that a porous compressive layer prepared by dispersing a number of nanofibers and a number of skeletal particles in a solvent such as water in a given ratio, and removing the solvent from the mixture-dispersed solution is utilized as a filter medium, there is the following problem. Namely, because the nanofibers and skeletal particles are mixed as separate members, when a dry method (a method of mixing the materials in the air without through a solvent) is employed as a mixing method, there occurs variations in the distribution of voids formed by fibers or by fibers and particles in a dry non-woven fabric layer after collection of fibers due to the heterogeneity at the time of mixing. Furthermore, when a general papermaking method is employed as a mixing method, particles localize on the surface at the collection surface net side by the precipitation of particles, and do not uniformly disperse over the whole. As a result, there occurs variations in the distribution of voids formed by fibers and particles in a wet nonwoven fabric layer after the papermaking.
Accordingly, as the performance of an air filter, it is difficult to constantly suppress the initial pressure drop, for example, at a filtration air volume of 70 m³/min, to 305 Pa or less and at a filtration air volume of 50 m³/min, to 220 Pa or less, while using a nanofiber filter medium. The large initial pressure drop at such high air volumes is a drawback in obtaining practically sufficient merit from the standpoint of energy saving, for example, and has made it difficult to manufacture a high air volume and low pressure drop type high-performance air filter as a product.
Non-Patent Document 1: Preparation of nanofiber filter using electrospinning method and evaluation of its performance (Japan Association of Aerosol Science and Technology, 24th Aerosol Science and Technology Research Symposium, collection of papers, issued August 9, 2007)
Patent Document 1: JP-T-2000-507382 (the term "JP-T" as used herein means a published Japanese translation of a PCT patent application)

### Disclosure of the Invention

### Problems that the Invention is to Solve

Accordingly, an object of the present invention is to provide a high air volume and low pressure drop type high-performance air filter using a nanofiber filter medium.

### Means for Solving the Problems

To solve the above problems, a filter medium for an air filter of the present invention comprises a nanofiber filter medium, as described in claim 1 which when a filter medium face velocity is 5.3 cm/s, has a performance index of collecting target particle diameter of 0.3 µm , 0.040 (1/Pa) or more, a performance index of collecting target particle diameter of 0.1 µm, 0.030 (1/Pa) or more, and a performance index of collecting target particle diameter of 0.05 µm, 0.050 (1/Pa) or more.
A filter medium for an air filter described in claim 2 is the filter medium for an air filter as described in claim 1, whose performance index of collecting target particle diameter of 0.3 µm is 0.060 (1/Pa) or more, whose performance index of collecting target particle diameter of 0.1 µm is 0.040 (1/Pa) or more, and whose performance index of collecting target particle diameter of 0.05 µm is 0.070 (1/Pa) or more.
A filter medium for an air filter described in claim 3 is the filter medium for an air filter as described in claim 1 or 2, whose fiber packing density is 0.01 to 0.25, and whose fiber packing inhomogeneity factor is 1.0 to 2.0.
A filter medium for an air filter described in claim 4 is the filter medium for an air filter as described in any one of claims 1 to 3, the nanofiber filter medium being prepared by fibers and beads.
A filter medium for an air filter described in claim 5 is the filter medium for an air filter as described in claim 4, the fibers of which have an average fiber diameter 0.01 to 0.50 µm, and the beads of which have a particle diameter 1 to 9 times the average fiber diameter.
The air filter of the present invention, as described in claim 6, uses a filter pack comprising a folded nanofiber filter medium, fitted to a filter frame through a seal material, the nanofiber filter medium being the filter medium for an air filter as described in any one of claims 1 to 5.
A air filter described in claim 7 is the air filter as described in claim 6, whose initial pressure drop at a filtration air volume of 70 m³/min is 305 Pa or less or whose initial pressure drop at a filtration air volume of 50 m³/min is 220 Pa or less, and whose collection efficiency of 0.3 µm particles is 99.97% or more.

### Brief Description of the Drawings

Fig. 1 is an explanatory view showing an air filter according to the best mode for carrying out the invention.
Fig. 2 is electron micrographs showing examples and comparative example of a filter medium used in an air filter.
Fig. 3 is an explanatory view showing a production apparatus for producing a filter medium.
Fig. 4 is an explanatory view showing a production process of a filter medium.
Fig. 5 is an explanatory view showing other production process of a filter medium.

### Description of Reference Numerals and Signs

- 1: Air filter
- 2: Filter medium
- 3: Separator
- 4: Filter pack
- 5: Seal material
- 6: Filter frame
- 7: Ultrafine fiber
- 8: Beads
- 9: Beaded fiber
- 10: Void
- 11: Polymer solution
- 11a: Polymer solution
- 11b: Polymer solution
- 12: Housing
- 13: Syringe
- 13a: Syringe
- 13b: Syringe
- 14: Aluminum plate

### Best Mode for Carrying Out the Invention

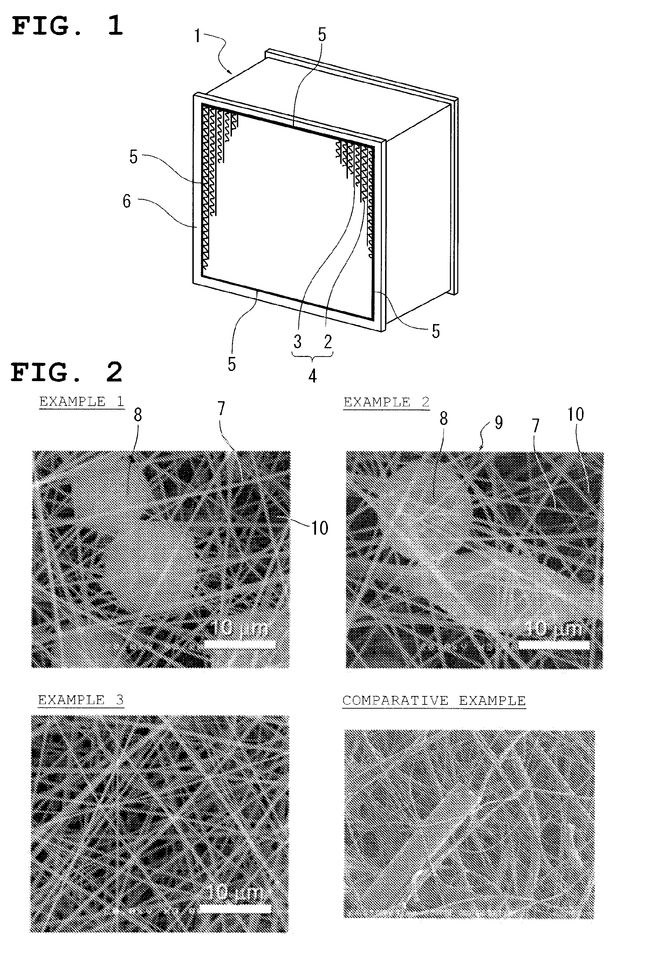

The best mode for carrying out the air filter according to the present invention is described below by referring to the accompanying drawings. As shown in Fig. 1, an air filter 1 according to the present embodiment is constituted such that a filter medium 2 is folded into a zigzag shape (lightning shape), a separator 3 is interposed such that each part of the folded filter medium 2 does not contact and overlap with other part thereof, thereby constituting a filter pack 4, and the filter pack 4 is fitted to a filter frame 6 through a seal material 5.

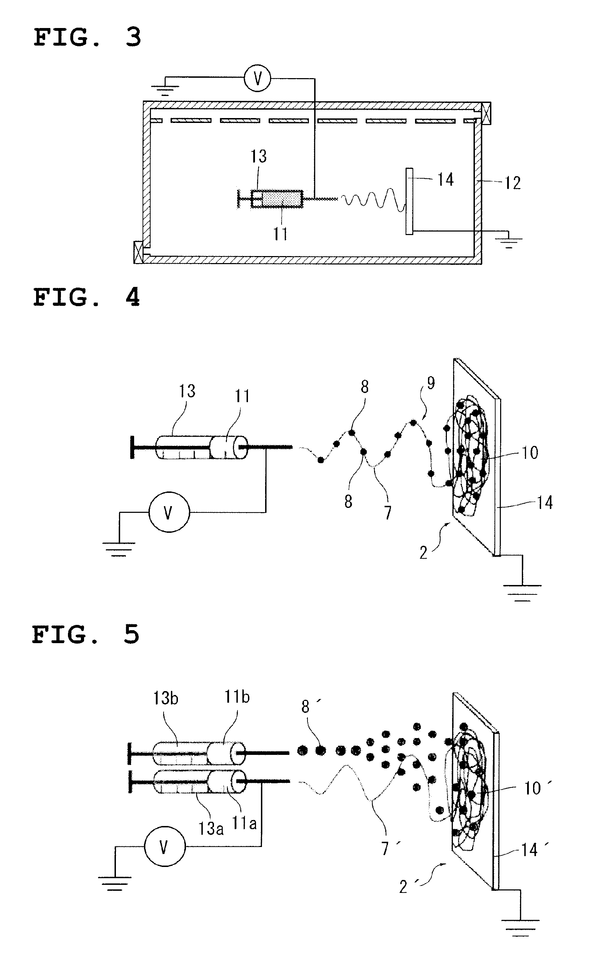

The filter medium 2 is explained by reference to the case of Example 2 described hereinafter. As shown in Fig. 2, the filter medium 2 is constituted of beaded fibers (nanofibers) 9 in which linear ultrafine fibers 4 and granular beads 8 are continuously connected, and voids 10 formed between the beaded fibers 9. To produce the filter medium 2, in principle, for example, an electrospinning method is used as shown in Fig. 3 and Fig. 4. The filter medium 2 can be prepared on an aluminum plate 14 by placing a polymer solution 11 obtained by dissolving a raw material of nanofibers in a solvent in a syringe 13 located in the inside of a stainless steel housing 12, applying high voltage between the syringe 13 side and an aluminum plate 14 as an earth electrode arranged in the inside of the housing 12, and spraying the polymer solution 11 from the syringe 13. Alternatively, explaining by referring to the case of Example 1 described hereinafter, a filter medium 2' comprising ultrafine fibers 7', beads 8' and voids 10' formed by those can be prepared on an aluminum plate 14' by providing two syringes 13a and 13b (in the inside of the housing 12), spraying the ultrafine fibers 7' from the syringe 13a containing a polymer solution 11a, and the spraying beads 8 from the syringe 13b containing a polymer solution 11b, as shown in Fig. 5.

As a raw material of the nanofiber, for example, polyurethane (PU) can be used for a middle-performance class air filter for general use, polyvinylidene fluoride (PVDF) can be used for an air filter having chemical resistance, polyacrylonitrile (PAN) can be used for a high-performance class air filter for general use, and polyether sulfone (PES) can be used for an air filter having heat resistance and chemical resistance. Other than those, it is considered that nylon, polyvinyl alcohol (PVA), silica (SiO₂), titanium (TiO₂) and the like are used as materials becoming a liquid having a polarity. On the other hand, as a solvent, for example, N,N-dimethylformamide (DFM) can be used. When the concentration of the polymer solution is less than 2 wt%, the polymer solution cannot be formed into fibers, and when the concentration exceeds 10 wt%, the polymer solution cannot be sprayed from the syringe. For this reason, the concentration is preferably 2 to 10 wet%. In particularly, the concentration is most preferably 5 to 8 wt%.

Ratio of logarithm of permeability and pressure drop (-lnP/ΔP) is commonly used as an index for evaluating performance simultaneously considering collection efficiency and pressure drop. This is generally called I value (Performance Index) or Q value (Quality Factor). The performance index has wind speed dependency and particle diameter dependency. Therefore, considering with the representative wind speed and particle diameter, in the case that a filter medium face velocity is 5.3 cm/s, the performance index of collecting target particle diameter of 0.3 µm of a filter medium constituted of nanofibers, is 0.040 (1/Pa) or more, and preferably 0.060 (1/Pa) or more. The performance index of collecting target particle diameter of 0.1 µm is 0.030 (1/Pa) or more, and preferably 0.040 (1/Pa) or more. Its performance index of collecting target particle diameter of 0.05 µm is 0.050 (1/Pa) or more, and preferably 0.070 (1/Pa) or more.

When fiber packing density of a filter medium (=whole fiber volume/filter medium volume) is high, high efficiency is achieved, but at the same time, pressure drop is apt to be high. Therefore, the fiber packing density is to be 0.01 to 0.25, and preferably 0.01 to 0.10. When fiber packing inhomogeneity factor of a filter medium (=theoretical value of pressure drop/ measured value of pressure drop) is high, there is a possibility that fibers do not effectively contribute to collect particles due to blow-by of air generated in the inside of a fiber layer. Therefore, the fiber packing inhomogeneity factor is to be 1.0 to 2.0, and preferably 1.0 to 1.5. Volume ratio of ultrafine fibers in a filter medium is 1 to 25%, and preferably 1 to 10%, from the relationship to the above fiber packing density.

The smaller the average fiber diameter of the ultrafine fibers is, the more effectively the ultrafine fibers act to collect particles. Therefore, the average fiber diameter is to be 0.01 to 0.50 µm, and preferably 0.01 to 0.25 µm. When the particle diameter of the beads is too small, distance between the fibers cannot be expanded, and the filter medium does not have the desired low filling rate. As a result, neither of high efficiency nor low pressure drop can be achieved. On the other hand, when the particle diameter of the beads is too large, the pressure drop can be decreased and collection efficiency can be increased. However, overall fiber length per unit area cannot be secured, and as a result, the entire efficiency of the filter medium having a constant thickness is not increased. For this reason, the particle diameter of the beads is to be 1 to 9 times the average fiber diameter of the ultrafine fibers.
When the bead 8 is a porous material having air permeability and obtained by a material such as PVA, a filter medium having low resistance as compared with a non-porous bead 8 can be provided.

### Examples

Examples of the present invention are described below together with Comparative Example for the purpose of comparison.

### [Example 1]

Example concurrently using an electrostatic spraying method and an electrospinning method (laminated filer medium of beads and fibers) is described.

Utilizing an electrostatic spraying method, a voltage of 6 to 8 kV was applied between a syringe 13b side and an aluminum plate 14', and a polymer solution 11b having a concentration of 10 wt% obtained by dissolving PMMA in a solvent DMF was sprayed from a syringe 13b at a flow rate of 6 µl/min. Thus, beads 8' having an average particle diameter of 1 to 2 µm were prepared.

On the other hand, utilizing an electrospinning method, a voltage of 7 to 10 kV was applied between a syringe 13a side and the aluminum plate 14', and a polymer solution 11a having a concentration of 8 wt% obtained by dissolving PAN in a solvent DMF was sprayed from a syringe 13a at a flow rate of 8 µl/min. Thus, ultrafine fibers 7' having an average fiber diameter of 400 nm to 600 nm were prepared.

The beads 8' prepared by the above electrostatic spraying method were deposited on the aluminum plate 14' altenating with the ultrafine fibers 7' prepared by the electrospinning method. Thus, a filter medium 2' having fiber packing density of 0.05, fiber packing inhomogeneity factor of 1.1, volume ratio of the ultrafine fibers 7' of 5%, thickness (including a protective layer and the like) of 0.38 mm and coating weight of 91 g/m² was prepared. An electron micrograph of the filter medium 2' thus obtained is shown in Fig. 2.

28.4 m² (/unit) of the filter medium 2 was folded in a zigzag shape, and while an interval of zigzag (lightning shape) parts of the filter medium 2 was held with an aluminum separator 6, a filter pack 3 of 580x580x265 mm was prepared.

The filter pack 4 and upper and lower faces of a metal or wooden filter frame 6 were area-sealed with a polyurethane seal material 5, and the filter pack 4 and lateral sides of the filter frame 6 were sealed with a seal material such as polyurethane in a linear form. Thus, an air filter 1 of 610x610x290 mm was prepared.

### [Example 2]

Example utilizing an electrospinning method (filter medium comprising beaded fibers of beads-containing fibers) is described.

A voltage of 8 to 12 kV was applied between a syringe 13 side and an aluminum plate 14, and a polymer solution 11 having a concentration of 7 wt% obtained by dissolving PAN in DMF was sprayed from a syringe 13 at a flow rate of 4 to 6 µl/min, and long string-shaped fibers 9 comprising ultrafine fibers 7 of 400 to 600 nm and ultrafine beads 8 having an average particle diameter of 1 to 2 µm were deposited on the aluminum plate 14. Thus, a filter medium 2 having fiber packing density of 0.05, fiber packing inhomogeneity factor of 1.1, volume ratio of the ultrafine fibers 7 of 5%, thickness (including a protective layer and the like) of 0.38 mm and coating weight of 91 g/m² was prepared. Using the filter medium 2, an air filter was prepared in the same manner as in Example 1. An electron micrograph of the filter medium 2 is shown in Fig. 2.

### [Example 3]

An air filter was prepared in the same manner as in Example 1, except that the filter medium used was a bead-free nanofiber filter medium consisting of linear ultrafine fibers and having fiber packing density of 0.113, fiber packing inhomogeneity factor of 1.5, thickness (including a protective layer and the like) of 0.38 mm and coating weight of 91 g/m². An electron micrograph of the filter medium is shown in Fig. 2.

### [Comparative Example]

An air filter was prepared in the same manner as in Example 1, except that the filter medium used was a glass fiber filter medium having fiber packing density of 0.065, fiber packing inhomogeneity factor of 2.3, thickness of 0.38 mm and coating weight of 70 g/m². An electron micrograph of the filter medium 2 is shown in Fig. 2.

Regarding properties of each air filter obtained in Examples 1, 2 and 3 and Comparative Example, collection efficiency and pressure drop were tested by applying format 1 (counting method) of JIS B 9908 (performance test method of ventilation air filter and electric dust collector). The results are shown in Table 1.

**[Table 1]**

| | Filter unit | | | Filter medium | | |
|---|---|---|---|---|---|---|
| | Filtration air volume (m³/min) | Collection efficiency (%) | Pressure drop (Pa) | Performance index when filter medium face velocity is 5.3 cm/s (1/Pa) | | |
| | | | | Target particle diameter 0.3 µm | Target particle diameter 0.1 µm | Target particle diameter 0.05 µm |
| Example 1 | 50 | ⊚ (99.99) | ⊚ (145) | ⊚ | ⊚ | ⊚ |
| | 70 | ⊚ (99.99) | ⊚ (200) | (0.093) | (0.069) | (0.114) |
| Example 2 | 50 | ⊚ (99.99) | ⊚ (175) | ⊚ | ⊚ | ⊚ |
| | 70 | ⊚ (99.99) | ⊚ (240) | (0.062) | (0.046) | (0.076) |
| Example 3 | 50 | ⊚ (99.99) | ○ (210) | ○ | ○ | ○ |
| | 70 | ⊚ (99.99) | ○ (290) | (0.042) | (0.031) | (0.052) |
| Comparative Example | 50 | ⊚ (99.99) | × (250) | × | × | × |
| | 70 | ⊚ (99.99) | × (350) | (0.031) | (0.023) | (0.038) |

In Table 1, the expression "⊚" in the column of collection efficiency indicates that the collection efficiency of 0.3 µm particles is 99.97% or more. Regarding the pressure drop, when the initial pressure drop at the filtration air volume of 70 m³/min is 250 Pa or less, it is indicated as "⊚", when the pressure drop is more than 250 Pa to 300 Pa, it is indicated as "⊚", and when the pressure drop exceeds 300 Pa, it is indicated as "×". Furthermore, when the initial pressure drop at the filtration air volume of 50 m³/min is 185 Pa or less, it is indicated as "⊚", when the pressure drop is more than 185 Pa to 220 Pa, it is indicated as "O", and when the pressure drop exceeds 220 Pa, it is indicated as "×".
Furthermore, at the column of "Target particle diameter 0.3 µm" in "Performance index when filter medium face velocity is 5.3 cm/s", "⊚" indicates 0.060 (1/Pa) or more, "○" indicates 0.040 (1/Pa) or more, and "×" indicates less than 0.040 (1/Pa). At the column of "Target particle diameter 0.1 µm", "⊚" indicates 0.040 (1/Pa) or more, "○" indicates 0.030 (1/Pa) or more, and "×" indicates less than 0.030 (1/Pa). At the column of "Target particle diameter 0.05 µm", "⊚" indicates 0.070 (1/Pa) or more, "○" indicates 0.050 (1/Pa) or more, and "×" indicates less than 0.050 (1/Pa).

It is seen from Table 1 that the air filters according to Examples 1, 2 and 3 using nanofibers in a filter medium can maintain both high collection efficiency and low pressure drop in the target filtration air volumes and have large merits such as energy saving, and as a result, there is high possibility that a high air volume and low pressure drop type high-performance air filter can be manufactured as a product. Contrary to this, the air filter according to Comparative Example using glass fibers in a filter medium cannot maintain both high collection efficiency and low pressure drop in the target filtration air volumes and therefore have small merits such as energy saving. As a result, there is difficulty to manufacture a high air volume and low pressure drop type high-performance air filter as a product.

The present invention is not limited to the above-described embodiments. For example, a filter medium may be prepared from raw materials other than the materials used in the Examples, and the folding method of a filter medium in a filter pack may be modified.

### Industrial Applicability

The present invention can mainly be applied to a high air volume and low pressure drop type HEPA, but can be applied to ULPA and the like by appropriately adjusting the fiber diameter, fiber packing density, filter medium thickness and the like. Thus, the present invention has industrial applicability.

## Claims

1. A filter medium for an air filter, comprising a nanofiber filter medium which when a filter medium face velocity is 5.3 cm/s, has a performance index of collecting target particle diameter of 0.3 µm, 0.040 (1/Pa) or more, performance index of collecting target particle diameter of 0.1 µm, 0.030 (1/Pa) or more, and performance index of collecting target particle diameter of 0.05 µm, 0.050 (1/Pa) or more.

2. The filter medium for an air filter as claimed in claim 2, **characterized in that** the performance index of collecting target particle diameter of 0.3 µm is 0.060 (1/Pa) or more, the performance index of collecting target particle diameter of 0.1 µm is 0.040 (1/Pa) or more, and the performance index of collecting target particle diameter of 0.05 µm is 0.070 (1/Pa) or more.

3. The filter medium for an air filter as claimed in claim 1 or 2, **characterized in that** the nanofiber filter medium has a fiber packing density of 0.01 to 0.25, and a fiber packing inhomogeneity factor of 1.0 to 2.0.

4. The filter medium for an air filter as claimed in any one of claims 1 to 3, **characterized in that** the nanofiber filter medium is prepared by fibers and beads.

5. The filter medium for an air filter as claimed in claim 4, **characterized in that** the fibers have an average fiber diameter of 0.01 to 0.50 µm, and the beads have a particle diameter 1 to 9 times the fiber average diameter.

6. An air filter comprising a filter pack comprising a folded nanofiber filter medium, fitted to a filter frame through a seal material, the nanofiber filter medium being the filter medium for an air filter as claimed in any one of claims 1 to 5.

7. The air filter as claimed in claim 6, **characterized in that** initial pressure drop at a filtration air volume of 70 m³/min is 305 Pa or less or initial pressure drop at a filtration air volume of 50 m³/min is 220 Pa or less, and collection efficiency of 0.3 µm particles is 99.97% or more.
